# EUROPÄISCHE PATENTSCHRIFT

(11) **EP 2 794 507 B1**
(45) Veröffentlichungstag und Bekanntmachung des Hinweises auf die Patenterteilung: **16.08.2023**
(21) Anmeldenummer: 12813005.1
(22) Anmeldetag: 21.12.2012
(51) Int. Cl.: C04B 22/00

(54) **BESCHLEUNIGER**
ACCELERATOR
ACCÉLÉRATEUR

(30) Priorität: 23.12.2011 EP 11195531
(43) Veröffentlichungstag der Anmeldung: 29.10.2014
(73) Patentinhaber: Sika Technology AG, 6340 Baar (CH)
(72) Erfinder: WOMBACHER, Franz, CH-8916 Jonen (CH); MARAZZANI, Beat, CH-8102 Oberengstringen (CH); BÜRGE, Christian, CH-5503 Schafisheim (CH); KURZ, Christophe, CH-5304 Endingen (CH); MÄDER, Gilbert, CH-8460 Marthalen (CH)
(74) Vertreter: Sika Patent Attorneys
(86) Internationale Anmeldenummer: PCT/EP2012/076715
(87) Internationale Veröffentlichungsnummer: WO 2013/093034

(56) Entgegenhaltungen:
- WO-A1-2010/026155
- DE-A1- 2 431 812
- GB-A- 891 170
- JP-A- 7 173 469
- JP-A- 2000 095 554

## Beschreibung

### Technisches Gebiet

Die Erfindung betrifft Zusatzmittel für hydraulische Bindemittel und daraus hergestellte Systeme wie Beton und Mörtel. Insbesondere betrifft die vorliegende Erfindung einen Abbinde- und Erhärtungsbeschleuniger für hydraulische Bindemittel hergestellt durch Umsetzung einer Calciumverbindung **CV** mit Silica-Sol **SL** sowie dessen Herstellung.

### Stand der Technik

Bei Beton- oder Stahlbetonfertigteilen oder bei Fahrbahn- oder Pistensanierungen wird vermehrt eine hohe Frühfestigkeit gefordert, damit die Fertigteile bereits nach wenigen Stunden entschalt, transportiert, gestapelt oder vorgespannt werden können oder die Fahrbahnen oder Pisten befahren werden können. Um diese Zielsetzung in der Praxis zu erreichen, werden neben leistungsfähigen Betonrezepturen, wie niedriger w/z-Wert oder hoher Zementgehalt, oftmals auch Wärme- oder Dampfbehandlungen angewendet. Diese Behandlungen brauchen viel Energie, so dass aufgrund steigender Energiepreise, erheblicher Investitionskosten und Dauerhaftigkeits- sowie Sichtbetonproblemen zunehmend von dieser Behandlung abgesehen wird und nach anderen Wegen zur Beschleunigung des Erhärtungsprozesses gesucht wird.

Beschleunigende Zusätze stellen bislang keine befriedigende Alternative zur Wärme- oder Dampfbehandlung dar. Es sind zwar Substanzen bekannt, welche das Abbinden und Erhärten von Beton beschleunigen, enthaltend Calciumverbindungen umgesetzt mit ausgewählten Siliciumdioxidverbindungen. So beschreibt beispielsweise DE202009017741 die Verwendung eines beschleunigenden Zusatzes enthaltend Calciumverbindungen umgesetzt mit pyrogener Kieselsäure oder gefällter Kieselsäure. Solche beschleunigenden Zusätze haben jedoch den Nachteil, dass sie zu einer unbefriedigenden Druckfestigkeit des erhärteten Betons führen.

### Darstellung der Erfindung

Aufgabe der vorliegenden Erfindung ist es daher, beschleunigenden Zusätze sowie Verfahren zu deren Herstellung zur Verfügung zu stellen, welche die oben genannten Nachteile nicht aufweisen.

Überraschenderweise wurde gefunden, dass dies durch das Verfahren zur Herstellung eines Abbinde- und Erhärtungsbeschleunigers für hydraulische Bindemittel gemäss Anspruch 1 erreicht werden kann.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Die vorliegende Erfindung umfasst ein Verfahren zur Herstellung eines Abbinde- und Erhärtungsbeschleunigers, nachfolgend auch Beschleuniger genannt, für hydraulische Bindemittel aufweisend einen Schritt:
(i) zur Umsetzung einer Calciumverbindung **CV** mit Silica-Sol **SL.**

Die Calciumverbindung **CV** ist ausgewählt aus der Gruppe bestehend aus Calciumchlorid, Calciumnitrat, Calciumformiat, Calciumacetat, Calciumbicarbonat, Calciumbromid, Calciumcitrat, Calciumchlorat, Calciumhydroxid, Calciumoxid, Calciumhypochlorid, Calciumiodate, Calciumiodid, Calciumlactat, Calciumnitrit, Calciumphosphat, Calciumpropionat, Calciumsulphat, Calciumsulphat-hemihydrat, Calciumsulphate-dihydrat, Calciumsulphid, Calciumtartrat, Calciumgluconat, Calciumsulfamat, Calciummaleinat, Calciumfumarat, Calciumadipat und Calciumaluminat. Vorzugsweise ist die Calciumverbindung **CV** ausgewählt aus der Gruppe bestehend aus Calciumnitrat und Calciumsulfamat.

Weiter kann es vorteilhaft sein, wenn es sich bei der Calciumverbindung **CV** um Calciumnitrat handelt, dies ist insbesondere für eine hohe Druckfestigkeit, insbesondere für eine hohe Druckfestigkeit nach 8 h, in hydraulischen Bindemitteln vorteilhaft.

Weiter kann es vorteilhaft sein, wenn es sich bei der Calciumverbindung **CV** um Calciumsulfamat handelt, dies ist insbesondere für ein hohes Ausbreitmass, insbesondere für ein hohes Ausbreitmass nach 1 min, in hydraulischen Bindemitteln vorteilhaft.

Unter dem Begriff "Silica-Sol", auch Kieselsol oder Kieselsäure-Sol genannt, wird im vorliegenden Dokument eine wässrige Lösung von annähernd kugelförmigen, kolloidal gelösten Polykieselsäure-Molekülen mit 30 - 60 % SiOz Gehalt, die sich jahrelang unverändert lagern lassen. Je nach Teilchengröße der Partikel ist Silica-Sol milchig-trüb bis farblos- klar. Der durchschnittliche Partikeldurchmesser beträgt 1- 150 nm. Die Herstellung erfolgt beispielsweise durch Behandeln wässriger Alkalisilicat-Lösungen, auch Wasserglas genannt, mit Ionenaustauschern und Stabilisierung durch wenig Alkali.

Unter dem Begriff "Wasserglas" werden im vorliegenden Dokument aus dem Schmelzfluss erstarrte wasserlösliche Salze von Kieselsäuren, insbesondere Kalium- und Natriumsilicate oder deren wässrige Lösungen verstanden, wie sie beschreiben sind in CD Römpp Chemie Lexikon, Version 1.0, Georg Thieme Verlag, Stuttgart 1995.

Von Silica-Sol zu unterscheiden ist beispielsweise pyrogene Kieselsäure, worunter hochdisperse Kieselsäuren zusammengefasst werden, die durch Flammenhydrolyse hergestellt werden. Dabei wird Siliciumtetrachlorid in einer Knallgas-Flamme zersetzt:
Weiter von Silica-Sol zu unterscheiden ist beispielsweise gefällte Kieselsäure. Sie werden aus einer wässrigen Alkalisilicat-Lösung durch Fällung mit Mineralsäuren hergestellt. Dabei bilden sich kolloidale Primärteilchen, die mit fortschreitender Reaktion agglomerieren und schliesslich zu Aggregaten verwachsen.

Das Silica-Sol **SL** weist einen pH von 3 - 7, insbesondere von 5 - 7 auf. Dies ist dahingehend von Vorteil, weil daraus in hydraulischen Bindemitteln sowohl eine hohe Druckfestigkeit, insbesondere eine hohe Druckfestigkeit nach 8 h, als auch ein hohes Ausbreitmass, insbesondere ein hohes Ausbreitmass nach 1 min, resultiert.

Weist das Silica-Sol **SL** einen pH von 7 - 9 auf, ist dies der Erreichung einer besonders hohen Druckfestigkeit in hydraulischen Bindemitteln zuträglich.

Weist das Silica-Sol **SL** einen pH von 3 - 5 auf, ist dies der Erreichung eines vorteilhaften Ausbreitmasses in hydraulischen Bindemitteln zuträglich.

Bei dem Silica-Sol **SL** handelt es sich um ein Silica-Sol mit einem durchschnittlichen Partikeldurchmesser von 1 - 150 nm, insbesondere von 1 - 50 nm, bevorzugt von 1 - 15 nm, am meisten bevorzugt von 1 - 5 nm.

Dies führt insbesondere bei der Verwendung der Beschleuniger in hydraulischen Bindemitteln zu einer hohen Druckfestigkeit nach 8 Stunden.

Die Umsetzung der Calciumverbindung **CV** mit dem Silica-Sol **SL** in Schritt (i) findet vorzugsweise in Gegenwart von Wasser, insbesondere in Wasser, statt.

Weiter ist es von Vorteil, wenn die Calciumverbindung **CV** und das Silica-Sol **SL** getrennt voneinander dem Wasser zugegeben werden.

Die Umsetzung in Schritt (i) findet vorzugsweise in einem Flüssigphasen-Reaktor ausgewählt aus der Gruppe bestehend aus Sulzermixer Reaktor, Reaktor mit externer Rezirkulation, Kaskadenreaktor, Loop Reaktor, Rühr-Reaktor und Reaktor mit Rotor-Stator-Mischer statt. Bevorzugte Flüssigphasen-Reaktoren sind insbesondere Rühr-Reaktoren, Statikmischer und Reaktoren mit Rotor-Stator-Mischer.

Im Verlauf der Umsetzung von Schritt (i) liegen folgende Molverhältnisse vor: Ca²⁺ : SiO₂ = 0.1 - 2.5, vorzugsweise 0.15 - 2.3. Dies führt insbesondere bei der Verwendung der Beschleuniger in hydraulischen Bindemitteln zu einer hohen Druckfestigkeit nach 8 Stunden.

Handelt es sich bei der Calciumverbindung **CV** um Calciumnitrat, so beträgt das Molverhältnis während der Umsetzung in Schritt (i) Ca²⁺ : SiO₂ vorzugsweise = 0.15 - 0.6, insbesondere bevorzugt 0.2 - 0.4. Dies ist insbesondere zur Erreichung eines vorteilhaften Ausbreitmasses in hydraulischen Bindemitteln bei gleichzeitiger hoher Druckfestigkeit nach 8 Stunden vorteilhaft.

Handelt es sich bei der Calciumverbindung **CV** um Calciumsulfamat, so beträgt das Molverhältnis während der Umsetzung in Schritt (i) Ca²⁺ : SiO₂ vorzugsweise = 0.1 - 2.5, bevorzugt = 1.5 - 2.5, insbesondere bevorzugt = 2.0 - 2.5. Dies ist insbesondere zur Erreichung einer hohen Druckfestigkeit nach 8 Stunden vorteilhaft.

Handelt es sich bei der Calciumverbindung **CV** um Calciumsulfamat, ist ein Molverhältnis während der Umsetzung in Schritt (i) von Ca²⁺ : SiO₂ = 0.1 - 2.5, bevorzugt = 0.1 - 1.5, insbesondere bevorzugt = 0.1 - 0.5, vorteilhaft, denn dies einem vorteilhaften Ausbreitmasses in hydraulischen Bindemitteln zuträglich.

Während der Umsetzung in Schritt (i) kann weiter eine Verbindung ausgewählt aus der Gruppe bestehend aus Aluminiumsalz, Aluminiumhydroxid, Aluminiumoxid, Magnesiumsalz, Magnesiumhydroxid und Magnesiumoxid, zugegeben werden, insbesondere sind diese Salze ausgewählt aus der Gruppe bestehend aus Nitrate und Nitrile.

Es kann weiter vorteilhaft sein, wenn das Verfahren weiter einen Schritt (ii) zur Zugabe von 1 - 10 Gew.-%, vorzugsweise 2 - 8 Gew.-%, insbesondere bevorzugt 4 - 8 Gew.-%, N-Methyldiethanolamin, , bezogen auf das Gesamtgewicht des Abbinde- und Erhärtungsbeschleunigers, aufweist. Überraschenderweise wurde gefunden, dass sich dies vorteilhaft auf die Druckfestigkeit nach 8 Stunden auswirkt. Weiter wurde überraschenderweise gefunden, dass das N-Methyldiethanolamin die Lagerstabilität des Abbindeund Erhärtungsbeschleunigers verbessert.

Es kann weiter vorteilhaft sein, wenn das Verfahren weiter einen Schritt (iii) zur Zugabe eines Verdickungmittels, insbesondere ausgewählt aus der Gruppe bestehend aus Celluloseether, Polysacharide, Stärkederivate, Polyvinylalkohole, Polyacrylamide und Polyacrylate, insbesondere handelt es sich bei dem Verdickungmittel um Polyacrylate, und/oder weiter einen Schritt
(iv) zur Zugabe einer Verbindung ausgewählt aus der Gruppe bestehend aus Aminoalkohole, Hydroxycarbonsäuren, (Erd)-Alkalithiocyanate, (Erd)-Alkalihalogenide und Glycerinverbindungen, aufweist.

Weiter kann eine Zugabe von einem Dispergiermittel ausgewählt aus der Gruppe bestehend aus Polycarboxylate, MelaminFormaldehydkondensate, Naphthalinsulfonate, Ligninsulfonate und Polyoxyalkylene vorteilhaft sein, vorzugsweise beträgt das Mischverhältnis in Gewichts-% der Wirkstoffe: Dispergiermittel: Silica-Sol **SL** = 0.01 - 30, vorzugsweise 1 - 10, insbesondere bevorzugt 1.5-5.0

Es kann jedoch aber auch vorteilhaft sein, wenn keine der vorgenannten Dispergiermittel zugegeben werden.

Typischerweise wird in dem Verfahren der Schritt (i) bei einer Temperatur von -10 - 90 °C, einem pH von 4 - 9 und einem Druck von 0.8 - 20 bar durchgeführt.

Es ist insbesondere für die aus dem Beschleuniger resultierende Frühfestigkeit vorteilhaft, wenn das Verfahren weiter einen Schritt (v) des Zerkleinerns des Umsetzungsproduktes aus Schritt (i) aufweist. Insbesondere handelt es sich bei dem Schritt (v) um Zerkleinern durch Rührwerksmühlen, Walzenstühlen, Kolloidmühlen, Rotor-Stator-Mischer und/oder Homogenisatoren, vorzugsweise durch Rotor-Stator-Mischer und/oder Homogenisatoren.

Vorzugsweise führt der der Schritt (v) zu einer durchschnittlichen Partikelgrösse des Reaktionsprodukts von 1000 - 10, vorzugsweise 100 - 10 nm. Dies ist insbesondere für die aus dem Beschleuniger resultierende Frühfestigkeit vorteilhaft.

In einem weiteren Aspekt betrifft die vorliegende Erfindung einen Abbinde- und Erhärtungsbeschleuniger hergestellt nach einem der vorgehend genannten Verfahren. Der Abbinde- und Erhärtungsbeschleuniger liegt als Pulver, vor, insbesondere als Kolloid, Suspension oder als wässrige Lösung.

Der erfindungsgemässe Abbinde- und Erhärtungsbeschleuniger findet in unterschiedlichen Bereichen Anwendung, insbesondere in der Beton- und Zementtechnologie. Der Beschleuniger verfügt über besonders gute Eigenschaft als Beschleuniger für hydraulisch abbindende Zusammensetzungen, das heisst, dass er zur Beschleunigung des Abbindens und Erhärtens von hydraulischen Bindemitteln, insbesondere von Schnellzement, sowie daraus hergestelltem Mörtel oder Beton, verwendet werden kann. Zudem kann mit dem erfindungsgemässen Beschleuniger Mörtel oder Beton hergestellt werden, welcher eine hohe Früh- sowie Endfestigkeit aufweist. Der erfindungsgemässe Abbinde- und Erhärtungsbeschleuniger ist somit besonders geeignet, wenn die hydraulisch abbindende Zusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten, damit die Fertigteile bereits nach wenigen Stunden entschalt, transportiert, gestapelt oder vorgespannt werden können oder die Fahrbahnen oder Pisten befahren werden können.

Als hydraulisch abbindende Systeme oder Zusammensetzungen können grundsätzlich alle dem Beton-Fachmann bekannten hydraulisch abbindenden Substanzen verwendet werden. Insbesondere handelt es sich hier um hydraulische Bindemittel wie Zemente, wie beispielsweise Portlandzemente oder Tonerdeschmelzzemente und respektive deren Mischungen mit Flugaschen, Silica fume, Schlacke, Hüttensande und Kalksteinfiller. Weitere hydraulisch abbindende Substanzen im Sinne der vorliegenden Erfindung ist gebrannter Kalk. Als hydraulisch abbindende Zusammensetzung wird Zement bevorzugt. Weiterhin sind Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether, Beschleuniger, Korrosionsinhibitoren, Verzögerer, Schwindreduzierer, Entschäumer oder Porenbildner möglich.

Der erfindungsgemässe Beschleuniger kann zur Verwendung sowohl in flüssiger als auch in fester Form, sowohl allein oder als Bestandteil eines Zusatzmittels verwendet werden.

Um die Verarbeitbarkeit zu verbessern und die Verarbeitungszeit nach Zugabe des erfindungsgemässen Beschleunigers zu einem hydraulischen Bindemittel zu verlängern, enthält das Zusatzmittel zusätzlich zum Beschleuniger bevorzugt einen Verflüssiger. Als Verflüssiger kommen beispielsweise Lignosulfonate, sulfonierte Naphthalin-Formaldehyd Kondensate, sulfonierte Melamin-Formaldehyd-Kondensate, sulfonierte Vinylcopolymere oder Polycarboxylatverflüssiger, wie sie beispielsweise in der Betonchemie als Hochleistungsverflüssiger bekannt sind, oder Mischungen davon, in Frage.

Der Beschleuniger oder das Zusatzmittel enthaltend den Beschleuniger kann auch weitere Bestandteile enthalten. Beispiele für weitere Bestandteile sind Lösungsmittel, insbesondere Wasser, oder Additive, wie weitere beschleunigende Substanzen wie beispielsweise Thiocyanate, Nitrate oder Aluminiumsalze, Säuren oder deren Salze oder aminhaltige Substanzen wie Alkanolamine, Verzögerer, Schwindreduzierer, Entschäumer, oder Schaumbildner.

Falls der erfindungsgemässe Beschleuniger oder das Zusatzmittel enthaltend den Beschleuniger in flüssiger Form verwendet werden, wird für die Umsetzung vorzugsweise ein Lösungsmittel eingesetzt. Bevorzugte Lösungsmittel sind beispielsweise Hexan, Toluol, Xylol, Methylcyclohexan, Cyclohexan oder Dioxan sowie Alkohole, insbesondere Ethanol oder Isopropanol, und Wasser, wobei Wasser das am meist bevorzugte Lösungsmittel ist.

Der erfindungsgemässe Beschleuniger oder das Zusatzmittel enthaltend den Beschleuniger können auch in festem Aggregatzustand vorliegen, beispielsweise als Pulver, Schuppen, Pellets, Granulate oder Platten und lassen sich in dieser Form problemlos transportieren und lagern.

Der erfindungsgemässe Beschleuniger kann beispielsweise im festen Aggregatzustand vorliegen und mit einem Verflüssiger, welcher ebenfalls im festen Aggregatzustand vorliegt, vermischt werden und so über längere Zeit gelagert oder transportiert werden.

Der erfindungsgemässe Beschleuniger oder das Zusatzmittel enthaltend den Beschleuniger können im festem Aggregatzustand auch Bestandteil einer Zementzusammensetzung, einer sogenannten Trockenmischung, sein, die über längere Zeit lagerfähig ist und typischerweise in Säcken abgepackt oder in Silos gelagert wird und zum Einsatz kommt.

Der erfindungsgemässe Beschleuniger oder das Zusatzmittel enthaltend den Beschleuniger können auch einer üblichen Betonzusammensetzung mit oder kurz vor oder kurz nach der Zugabe des Wassers beigegeben werden. Als besonders geeignet gezeigt hat sich hierbei die Zugabe des erfindungsgemässen Beschleuniger in Form einer wässrigen Lösung oder Dispersion, insbesondere als Anmachwasser oder als Teil des Anmachwassers oder als Teil eines flüssigen Zusatzmittels, welches mit dem Anmachwasser zum hydraulischen Bindemittel gegeben wird.

Der erfindungsgemässe Beschleuniger oder das Zusatzmittel kann in flüssiger Form auch vor oder nach dem Mahlen des hydraulischen oder latent hydraulischen Bindemittels auf das Bindemittel, den Beton, Mörtel, sowie nicht hydraulische Zusatzstoffe aufgesprüht werden. Beispielsweise kann das hydraulische Bindemittel teilweise mit dem Beschleuniger oder dem Zusatzmittel enthaltend den Beschleuniger beschichtet werden. Dies ermöglicht die Herstellung eines hydraulischen Bindemittels, insbesondere Zement oder latent hydraulische Schlacke, welche bereits den Beschleuniger oder das Zusatzmittel enthaltend den Beschleuniger enthält und so als Fertigmischung, beispielsweise als sogenannten Schnellzement, gelagert und verkauft werden kann. Dieser Zement weist nach Zugabe des Anmachwassers die gewünschten Eigenschaften des schnellen Abbindens und der hohen Frühfestigkeit auf, ohne dass zusätzlich zum Anmachwasser auf der Baustelle ein weiteres Zusatzmittel zugefügt werden muss.

In einem weiteren Aspekt betrifft die vorliegende Offenbarung ein Bindemittel enthaltendes Gemisch umfassend mindestens ein hydraulisch abbindendes Bindemittel und mindestens einen erfindungsgemässen Abbindeund Erhärtungsbeschleuniger. Als Bindemittel kommen beispielsweise Zement, insbesondere Portlandzemente oder Tonerdeschmelzzemente und respektive deren Mischungen mit Flugaschen, Silica fume, Schlacke, Hüttensande, Gips und Kalksteinfiller oder gebrannter Kalk, ein latent hydraulisches Pulver oder inertes mikroskopisches Pulver in Frage. Als Bindemittel enthaltende Gemische kommen vorzugsweise Betonzusammensetzungen in Frage.

Weiterhin kann das Gemisch weitere Zuschlagstoffe wie Sand, Kies, Steine, Quarzmehl, Kreiden sowie als Additive übliche Bestandteile wie Betonverfüssiger, beispielsweise Lignosulfonate, sulfonierte Naphthalin-Formaldehyd Kondensate, sulfonierte Melamin-Formaldehyd-Kondensate oder Polycarboxylatether (PCE), Beschleuniger, Korrosionsinhibitoren, Verzögerer, Schwindreduzierer, Entschäumer oder Schaumbildner enthalten.

Vorzugsweise enthält das Bindemittel enthaltende Gemisch zusätzlich zum Beschleuniger mindestens einen Verflüssiger, vorzugsweise einen Verflüssiger auf Polycarboxylatether-Basis (PCE).

Der erfindungsgemässe Beschleuniger wird bevorzugt in einer Menge von 0.01 bis 30 Gew.-%, vorzugsweise 0.1 bis 10 Gew.-%, bezogen auf das Gewicht des Bindemittels verwendet, um die gewünschte Wirkung zu erzielen. Es können auch mehrere Beschleuniger gemischt verwendet werden, um die gewünschte Wirkung zu erzielen.

In einem weiteren Aspekt betrifft die vorliegende Offenbarung ein Verfahren zur Herstellung eines Bindemittels enthaltenden Gemisches wobei der mindestens eine erfindungsgemässe Beschleuniger getrennt oder als Zusatzmittel vorgemischt in fester oder flüssiger Form dem Bindemittel zugegeben wird.

In einem weiteren Aspekt betrifft die vorliegende Offenbarung ein Verfahren zur Beschleunigung des Abbindens und Erhärtens von hydraulischen Bindemitteln sowie daraus hergestelltem Mörtel oder Beton, wobei einem Gemisch, welches hydraulische Bindemittel enthält, ein erfindungsgemässer Abbinde- und Erhärtungsbeschleuniger in einer Menge von 0.01 bis 30 Gew.-%, vorzugsweise 0.2 bis 20 Gew.-%, insbesondere bevorzugt 0.1 bis 10 Gew.-%, bezogen auf das Gewicht des hydraulischen Bindemittels, zugegeben wird.

Mit der vorliegenden Offenbarung wird ein Zusatzmittel für hydraulische Bindemittel sowie ein Verfahren zu dessen Herstellung bereitgestellt, welches den Abbinde- und Erhärtungsprozess der hydraulischen Bindemittel beschleunigt ohne sich negativ auf die Verarbeitungszeiten, die Festigkeitsentwicklung oder die Dauerhaftigkeit der damit hergestellten Mörteloder Betonzusammensetzungen auszuwirken. Das offenbarte Zusatzmittel und insbesondere der offenbarte Abbinde- und Erhärtungsbeschleuniger ist somit besonders geeignet, wenn die hydraulisch abbindende Zusammensetzung sehr schnell nach der Applikation wieder belastbar oder begehbar sein muss, beispielsweise im Strassen- oder Brückenbau, bei der Vorfabrikation von Betonelementen bei Beton- und Stahlbetonfertigteilen oder bei Pistensanierungen, insbesondere bei Flugpisten. Dadurch können die Fertigteile bereits nach wenigen Stunden entschalt, transportiert, gestapelt oder vorgespannt werden oder die Fahrbahnen oder Pisten befahren werden.

### Ausführungsbeispiele

### Eingesetzte Rohstoffe

**Tabelle 1. Charakterisierung der verwendeten Rohstoffe und deren Bezeichnung.**

| | | |
|---|---|---|
| ***CV1*** | Ca(NO₃)₂ × 4 H₂O | Yara GmbH&Co, Deutschland |
| ***CV2*** | Ca(O-SO₂-NH₂)₂ | Sika Technology AG |
| ***SL*** | Cembinder 110, Partikelgrösse 2.5 nm, pH 6, kolloidal gelösten Polykieselsäure-Molekülen mit 7.2 % SiO₂ Gehalt | AkzoNobel, Schweden |
| ***GK*** | Gefällte Kieselsäure, Sipernat 500, Partikelgrösse 6 µm, pH 6, Wassergehalt ≤ 3 % | Evonik Degussa Deutschland |
| ***PK*** | Pyrogene Kieselsäure, Aerosil-380, Partikelgrösse 7 nm, pH (4% Dispersion) 4.2, Wassergehalt < 2 % | Evonik Degussa Deutschland |
| ***PCE*** | Polycarbonsäure mit Polyoxyalkylenseitenketten, Wassergehalt 60 % | Sika Schweiz AG, Schweiz |
| ***CF*** | Calciumformiat, Erhärtungsbeschleuniger | Amik, Italien |
| ***MDEA*** | N-Methyldiethanolamin, Erhärtungsbeschleuniger | BASF, Schweiz |
| ***GL*** | Glycerin | Impag AG, Schweiz |
| ***CM*** | Carbomer 940, Polyacrylsäurepolymer, Verdicker | Lubrizol, Belgien |

### Herstellung der Zusatzmittel

Es wurden erfindungsgemässe Beschleuniger sowie Vergleichverbindungen nach den nachstehend beschrieben Verfahren hergestellt, wobei die verwendeten Rohstoffe gemäss Tabelle1 gemäss den in Tabelle 2 beschriebenen Verhältnissen eingesetzt wurden.

### Herstellungsverfahren Beschleuniger

Die in der Tabelle 2 beschriebenen Mengen **CV** wurden in Wasser gelöst in einem 2 Liter Becher vorgelegt. Danach wurde die angegebene Menge **SL** innerhalb einer Stunde zugegeben. Der Inhalt des 2 Liter Bechers wurde unter Verwendung von einem Flügelrührer (RW 20.n, Ika Labortechnik) mit Flügelrührerdurchmesser 5 cm, mit 500 bis 2000 rpm während der Zugabe des **SL** sowie für weitere 15 min gerührt. Danach wurde mit einem Rotor-stator-Mischer (PT2100, Polytron, Kinematica, Schweiz) 30 Sekunden lang homogenisiert. Nach dem Mischen mit dem Rotor-Stator-Mischer wurde nochmals 15 Minuten mit ein Flügelrührer (Modell wie oben beschrieben) gerührt. Der pH des ***SL*** betrug 6.0, aussen im Fall von ***B13*** pH = 4.0, respektive ***B15*** pH = 8.3.

Im Falle des Beschleunigers ***B9*** wurden zusätzlich ***PCE*** (2.94 Gew.-%), ***GL*** (3.32 Gew.-%), ***CF*** (12.02 Gew.-%), ***CM*** (0.2 Gew.-%) und ***MDEA** (2* Gew.-%) zugegeben. Zugabe nach Rotor-Stator-Mischer.

Im Falle der Beschleunigers ***B13*** - ***B15*** wurde zusätzlich 6 Gew.-% ***MDEA*** zugegeben. Zugabe nach Rotor-Stator-Mischer.

### Mörteltests

Die Wirksamkeit der erfindungsgemässen Beschleuniger ***B1*** - ***B15*** sowie der Vergleichsbeispiele ***VB1*** und ***VB2*** wurde im Mörtel getestet.

| Zusammensetzung der Mörtelmischung (**MM**): (Grösstkorn 8mm) | Menge in g |
|---|---|
| Portlandzement (SVW CEM I 42.5N) | 750 |
| Kalksteinfiller | 141 |
| Sand 0-1 mm | 738 |
| Sand 1-4 mm | 1107 |
| Sand 4-8 mm | 1154 |

Als Zement wurde SVW (schweizer Zementsorten Siggenthal, Vigier, Wildegg, 1:1:1 Gemisch) CEM I 42.5N verwendet, welcher eine Feinheit nach Blaine von ca. 3400 cm²/g hat.

Die Sande, der Filler und der Zement wurden 1 Minute in einem Hobart-Mischer trocken gemischt. Innerhalb von 10 Sekunden wurde das Anmachwasser, in dem der Beschleuniger gelöst oder dispergiert war, zugegeben und noch weitere 170 Sekunden gemischt. Die Gesamt-Mischzeit nass war 3 Minuten. Der Wasser/Zement-Wert (w/z-Wert) betrug 0.4.

Allen Mörteln wurde zusätzlich noch 1 Gew.-% (auf das Zementgewicht) eines Verflüssigers (Sika ViscoCrete 3081S, erhältlich bei Sika Schweiz AG, Schweiz) zugegeben, um die Verarbeitbarkeit der Mörtelmischungen zu verbessern.

Zur Bestimmung der Wirksamkeit des erfindungsgemässen Beschleunigers wurden die Mörtelmischungen **MM** mit den verschiedenen Beschleunigern der Tabelle 2 versetzt (siehe Tabelle 3).

Die Mörtelzusammensetzungen (***MZ***) ***MZ4*** - ***MZ6, MZ9*** - ***MZ13, MZ15** - **MZ17*** und ***MZ19*** - ***MZ20*** stellen erfindungsgemässe Beispiele dar, während die Mörtelzusammensetzungen ***MZ1*** - ***MZ3, MZ7, MZ14, MZ18*** und ***MZ21*** Vergleichsbeispiele darstellen.

Zur Bestimmung der Wirksamkeit des erfindungsgemässen Beschleunigers beziehungsweise des Zusatzmittels wurde das Ausbreitmass (ABM) sowie die Druckfestigkeit in Tabelle 3 bestimmt.

**Tabelle 2, * = Gew.-%, bezogen auf das Gesamtgewicht des**

| Beschleuniger (B) | CV, Gew.-%* | SiO₂-Quelle,Gew.-%* | Ca²⁺: SiO₂ |
|---|---|---|---|
| VB1 | CV1, 50.47 | GK, 2.65 | 1:0.31 |
| VB2 | CV1, 50.47 | PK, 2.65 | 1:0.31 |
| B1 | CV1, 36.87 | SL, 53.88 | 1:0.62 |
| B2 | CV1, 50.47 | SL, 36.88 | 1:0.31 |
| B3 | CV1, 61.87 | SL, 22.61 | 1:0.16 |
| B4 | CV1, 25.33 | SL, 36.88 | 1:0.62 |
| B5 | CV1, 31.61 | SL, 36.88 | 1:0.5 |
| B6 | CV1, 37.9 | SL, 36.88 | 1:0.41 |
| B7 | CV1, 44.18 | SL, 36.88 | 1:0.35 |
| B8 | CV1, 50.47 | SL, 36.88 | 1:0.31 |
| B9 | CV1, 40.15 | SL, 29.34 | 1:0.3 |
| B10 | CV2, 25.7 | SL, 14.2 | 1:0.23 |
| B11 | CV2, 15.8 | SL, 47.0 | 1:1.24 |
| B12 | CV2, 11.5 | SL, 61.7 | 1:2.24 |
| B13 | CV1 47.4 | SL, 34.7, pH 4.0 | 1:0.3 |
| B14 | CV1 47.4 | SL, 34.7, pH 6.0 | 1:0.3 |
| B15 | CV1 47.4 | SL, 34.7, pH 8.3 | 1:0.3 |

### Beschleunigers B.

| | Beschleunig er/Gew.-%* | ABM (in %) nach 1 min vergl. mit MZ1 | Druckfestigkeit (in %) 8 h vergl. mit MZ1 | Ca²⁺ : SiO₂ |
|---|---|---|---|---|
| ***MZ1*** | - | 100 | 100 | - |
| ***MZ2*** | ***VB1***/0.71 | 105 | 156 | 1:0.31 |
| ***MZ3*** | ***VB2***/0.71 | 109 | 161 | 1:0.31 |
| ***MZ4*** | ***B1***/0.71 | 76 | 211 | 1:0.62 |
| ***MZ5*** | ***B2***/0.71 | 78 | 240 | 1:0.31 |
| ***MZ6*** | ***B3***/0.71 | 94 | 214 | 1:0.16 |

| | Beschleunig er/Gew.-%* | ABM (in %) nach 1 min vergl. mit MZ7 | Druckfestigkeit (in %) 8 h vergl. mit MZ7 | Ca²⁺ : SiO₂ |
|---|---|---|---|---|
| ***MZ7*** | - | 100 | 100 | - |
| ***MZ9*** | ***B4***/0.71 | 85 | 137 | 1:0.62 |
| ***MZ8*** | ***B5***/0.71 | 91 | 183 | 1:0.5 |
| ***MZ10*** | ***B6***/0.71 | 95 | 213 | 1:0.41 |
| ***MZ11*** | ***B7***/0.71 | 96 | 260 | 1:0.35 |
| ***MZ12*** | ***B8***/0.71 | 98 | 370 | 1:0.31 |
| ***MZ13*** | ***B9***/0.71 | 109 | 463 | 1:0.3 |

| | Beschleunig er/Gew.-%* | ABM (in %) nach 1 min vergl. mit MZ14 | Druckfestigkeit (in %) 8 h vergl. mit MZ14 | Ca²⁺ : SiO₂ |
|---|---|---|---|---|
| ***MZ14*** | - | 100 | 100 | - |
| ***MZ15*** | ***B10***/0.71 | 106 | 139 | 1:0.23 |
| ***MZ16*** | ***B11***/*0.71* | 79 | 133 | 1:1.24 |
| ***MZ17*** | ***B12***/0.71 | 70 | 183 | 1:2.24 |

| | Beschleunig er/Gew.-%* | ABM (in %) nach 1 min vergl. mit MZ18 | Druckfestigkeit (in %) 8 h vergl. mit MZ18 | Ca²⁺ : SiO₂/ pH SL |
|---|---|---|---|---|
| ***MZ18*** | - | 100 | 100 | - |
| ***MZ19*** | ***B13***/072 | 117 | 467 | 1:0.3/ pH 4.0 |
| ***MZ20*** | ***B14***/0.72 | 103 | 489 | 1:0.3/ pH 6.0 |
| ***MZ21*** | ***B15***/0.72 | 104 | 511 | 1:0.3/ pH 8.3 |

Tabelle 3: * = Gew.-%, bezogen auf das Gesamtgewicht des Mörtelzusammensetzung ***MZ*** (inklusive Anmachwasser), Ausbreitmass (ABM) nach 1 Minuten (min).

Das Ausbreitmass (ABM) des Mörtels wurde gemäss EN 1015-3 bestimmt. Die Bestimmung erfolgte nach 1 min. Die Prüfung zur Bestimmung der Druckfestigkeit (in N/mm²) erfolgte mittels Prismen (40 × 40 × 160mm) nach 8 Stunden gemäss EN 196.1 und EN 12190.

Für die Anwendung im Strassen- oder Brückenbau, bei der Vorfabrikation von Betonelementen bei Beton- und Stahlbetonfertigteilen oder bei Pistensanierungen, wo die Fertigteile bereits nach wenigen Stunden entschalt, transportiert, gestapelt oder vorgespannt werden müssen oder die Fahrbahnen oder Pisten befahren werden müssen, sind hohe Festigkeitswerte nach 8 von grösster Bedeutung.

Die Ergebnisse von ***MZ1*** - ***MZ6*** zeigen, dass die Mörtelzusammensetzungen ***MZ3*** bis ***MZ6*,** welche Beschleuniger umfassend Silica-Sol **SL** sowie Calciumnitrat ***CV1*** enthalten, gegenüber den Mörtelzusammensetzungen ***MZ1*** und ***MZ2*,** die Beschleuniger umfassend Calciumnitrat ***CV1*** sowie gefällte Kieselsäure, respektive pyrogene Kieselsäure aufweisen, eine verbesserte Druckfestigkeit nach 8 h aufweisen. Das gleiche Verhalten wurde auch im Vergleich mit Beschleunigern umfassend ***CV2*** anstelle von ***CV1*** gefunden (nicht gezeigt).

Es wurde weiter Mörtelzusammensetzungen getestet, welche erfindungsgemässe Beschleuniger enthielten, deren **SL** einen durchschnittlichen Partikeldurchmesser von 2.5 nm, 5 nm, 7 nm, 12 nm, 30 nm, 40 nm oder 50 nm aufweisen. Es wurde gefunden, dass die Mörtelzusammensetzungen eine umso höhere Druckfestigkeit nach 8 h aufwiesen, je kleiner der durchschnittliche Partikeldurchmesser des **SL** des Beschleunigers war.

## Patentansprüche

1. Verfahren zur Herstellung eines Abbinde- und Erhärtungsbeschleunigers für hydraulische Bindemittel aufweisend einen Schritt:
(i) zur Umsetzung einer Calciumverbindung **CV** mit Silica-Sol **SL, dadurch gekennzeichnet, dass** die Calciumverbindung **CV** ausgewählt ist aus der Gruppe bestehend aus Calciumchlorid, Calciumnitrat, Calciumformiat, Calciumacetat, Calciumbicarbonat, Calciumbromid, Calciumcitrat, Calciumchlorat, Calciumhydroxid, Calciumoxid, Calciumhypochlorid, Calciumiodate, Calciumiodid, Calciumlactat, Calciumnitrit, Calciumphosphat, Calciumpropionat, Calciumsulphat, Calciumsulphat-hemihydrat, Calciumsulphate-dihydrat, Calciumsulphid, Calciumtartrat, Calciumgluconat, Calciumsulfamat, Calciummaleinat, Calciumfumarat, Calciumadipat und Calciumaluminat, und dass im Verlauf der Umsetzung von Schritt (i) folgende Molverhältnisse vorliegen: Ca²⁺ - SiO₂ = 0.1 - 2.5, und dass das Silica-Sol **SL** einen pH von 3 - 7 aufweist, und dass es sich bei dem Silica-Sol **SL** um ein Silica-Sol mit einem durchschnittlichen Partikeldurchmesser von 1 - 150 nm handelt, wobei der Abbinde- und Erhärtungsbeschleuniger als Pulver, Suspension oder als wässrige Lösung vorliegt.

2. Verfahren gemäss Anspruch 1, **dadurch gekennzeichnet, dass** in Schritt (i) die Umsetzung der Calciumverbindung **CV** mit Silica-Sol **SL** in Gegenwart von Wasser, insbesondere in Wasser, stattfindet.

3. Verfahren gemäss Anspruch 2, **dadurch gekennzeichnet, dass** die Calciumverbindung **CV** und Silica-Sol **SL** getrennt voneinander dem Wasser zugegeben werden.

4. Verfahren gemäss einem der Ansprüche 1 - 3, **dadurch gekennzeichnet, dass** es sich bei der Calciumverbindung **CV** um Calciumnitrat handelt und dass im Verlauf der Umsetzung von Schritt (i) folgende Molverhältnisse vorliegen: Ca²⁺ : SiO₂ = 0.15 - 0.6, vorzugsweise 0.2 - 0.4.

5. Verfahren gemäss einem der Ansprüche 1 - 3, **dadurch gekennzeichnet, dass** es sich bei der Calciumverbindung **CV** um Calciumsulfamat handelt und dass im Verlauf der Umsetzung von Schritt (i) folgende Molverhältnisse vorliegen: Ca²⁺ - SiO₂ = 0.1 - 2.5, bevorzugt = 1.5 - 2.5, insbesondere bevorzugt = 2.0 - 2.5.

6. Verfahren gemäss einem der Ansprüche 1 - 3, **dadurch gekennzeichnet, dass** es sich bei der Calciumverbindung **CV** um Calciumsulfamat handelt und dass im Verlauf der Umsetzung von Schritt (i) folgende Molverhältnisse vorliegen: Ca²⁺ - SiO₂ = 0.1 - 2.5, bevorzugt = 0.1 - 1.5, insbesondere bevorzugt = 0.1 - 0.5.

7. Verfahren gemäss einem der vorhergehenden Ansprüche, **dadurch gekennzeichnet, dass** das Verfahren weiter einen Schritt (ii) zur Zugabe von 1 - 10 Gew.-%, vorzugsweise 2 - 8 Gew.-%, insbesondere bevorzugt 4 - 8 Gew.-%, N-Methyldiethanolamin, bezogen auf das Gesamtgewicht des Abbinde- und Erhärtungsbeschleunigers, aufweist.

## Claims

1. Method for producing a setting and hardening accelerator for hydraulic binders, comprising a step:
(i) for reacting a calcium compound **CV** with silica sol **SL**, **characterized in that** the calcium compound **CV** is selected from the group consisting of calcium chloride, calcium nitrate, calcium formate, calcium acetate, calcium bicarbonate, calcium bromide, calcium citrate, calcium chlorate, calcium hydroxide, calcium oxide, calcium hypochloride, calcium iodates, calcium iodide, calcium lactate, calcium nitrite, calcium phosphate, calcium propionate, calcium sulfate, calcium sulfate hemihydrate, calcium sulfate dihydrate, calcium sulfide, calcium tartrate, calcium gluconate, calcium sulfamate, calcium maleate, calcium fumarate, calcium adipate and calcium aluminate, and **in that** in the course of the reaction of step (i), molar ratios present are as follows: Ca²⁺:SiO₂ = 0.1 - 2.5, and **in that** the silica sol **SL** has a pH of 3 - 7, and **in that** the silica sol **SL** is a silica sol having an average particle diameter of 1 - 150 nm, with the setting and hardening accelerator being present as a powder, a suspension or an aqueous solution.

2. Method according to Claim 1, **characterized in that** in step (i), the reaction of the calcium compound **CV** with silica sol **SL** takes place in the presence of water, especially in water.

3. Method according to Claim 2, **characterized in that** the calcium compound **CV** and silica sol **SL** are added to the water separately from one another.

4. Method according to any of Claims 1 - 3, **characterized in that** the calcium compound **CV** is calcium nitrate and **in that** in the course of the reaction of step (i), molar ratios present are as follows:
Ca²⁺:SiO₂ = 0.15 - 0.6, preferably 0.2 - 0.4.

5. Method according to any of Claims 1 - 3, **characterized in that** the calcium compound **CV** is calcium sulfamate and **in that** in the course of the reaction of step (i), molar ratios present are as follows:
Ca²⁺:SiO₂ = 0.1 - 2.5, preferably = 1.5 - 2.5, especially preferably = 2.0 - 2.5.

6. Method according to any of Claims 1 - 3, **characterized in that** the calcium compound **CV** is calcium sulfamate and **in that** in the course of the reaction of step (i), molar ratios present are as follows:
Ca²⁺:SiO₂ = 0.1 - 2.5, preferably = 0.1 - 1.5, especially preferably = 0.1 - 0.5.

7. Method according to any of the preceding claims, **characterized in that** the method further comprises a step (ii) for adding 1 - 10 wt.%, preferably 2 - 8 wt.%, especially preferably 4 - 8 wt.%, of N-methyldiethanolamine, based on the total weight of the setting and hardening accelerator.

## Revendications

1. Procédé de préparation d'un accélérateur de prise et de durcissement pour des liants hydrauliques présentant une étape :
(i) de transformation d'un composé du calcium **CV** avec un sol de silice SL, **caractérisé en ce que** le composé du calcium **CV** est choisi dans le groupe constitué par le chlorure de calcium, le nitrate de calcium, le formiate de calcium, l'acétate de calcium, le bicarbonate de calcium, le bromure de calcium, le citrate de calcium, le chlorate de calcium, l'hydroxyde de calcium, l'oxyde de calcium, l'hypochlorure de calcium, l'iodate de calcium, l'iodure de calcium, le lactate de calcium, le nitrite de calcium, le phosphate de calcium, le propionate de calcium, le sulfate de calcium, l'hémihydrate de sulfate de calcium, le dihydrate de sulfate de calcium, le sulfure de calcium, le tartrate de calcium, le gluconate de calcium, le sulfamate de calcium, le maléate de calcium, le fumarate de calcium, l'adipate de calcium, et l'aluminate de calcium, et **en ce qu'**au cours de la transformation de l'étape (i) les rapports molaires suivants sont présents : Ca²⁺ : SiO₂ = 0,1 à 2,5, et **en ce que** le sol de silice SL présente un pH de 3 à 7, et **en ce que** le sol de silice SL est un sol de silice doté d'un diamètre moyen de particule de 1 à 150 nm, l'accélérateur de prise et de durcissement étant présent en tant que poudre, suspension ou en tant que solution aqueuse.

2. Procédé selon la revendication 1, **caractérisé en ce que** dans l'étape (i) la transformation du composé du calcium **CV** avec un sol de silice SL a lieu en présence d'eau, en particulier dans l'eau.

3. Procédé selon la revendication 2, **caractérisé en ce que** le composé du calcium **CV** et le sol de silice SL sont ajoutés à l'eau séparément l'un de l'autre.

4. Procédé selon l'une quelconque des revendications 1 à 3, **caractérisé en ce que** le composé du calcium **CV** est le nitrate de calcium et **en ce qu'**au cours de la transformation de l'étape (i) les rapports molaires suivants sont présents : Ca²⁺ : SiO₂ = 0,15 à 0,6, de préférence 0,2 à 0,4.

5. Procédé selon l'une quelconque des revendications 1 à 3, **caractérisé en ce que** le composé du calcium **CV** est le sulfamate de calcium et **en ce qu'**au cours de la transformation de l'étape (i) les rapports molaires suivants sont présents : Ca²⁺ : SiO₂ = 0,1 à 2,5, préférablement = 1,5 à 2,5, en particulier préférablement = 2,0 à 2,5.

6. Procédé selon l'une quelconque des revendications 1 à 3, **caractérisé en ce que** le composé du calcium CV est le sulfamate de calcium et **en ce qu'**au cours de la transformation de l'étape (i) les rapports molaires suivants sont présents : Ca²⁺ : SiO₂ = 0,1 à 2,5, préférablement = 0,1 à 1,5, en particulier préférablement = 0.1 à 0,5.

7. Procédé selon l'une quelconque des revendications précédentes, **caractérisé en ce que** le procédé présente en outre une étape (ii) d'ajout de 1 à 10 % en poids, de préférence de 2 à 8 % en poids, en particulier préférablement de 4 à 8 % en poids, de N-méthyldiéthanolamine, par rapport au poids total de l'accélérateur de prise et de durcissement.
